# EUROPEAN PATENT APPLICATION

(11) **EP 3 562 032 A1**
(43) Date of publication of application: **30.10.2019**
(21) Application number: 18305515.1
(22) Date of filing: 25.04.2018
(51) Int. Cl.: H02S 30/10

(54) **PHOTOVOLTAIC MODULE AND PROCESS FOR MANUFACTURING A PHOTOVOLTAIC MODULE**

(71) Applicant: Total SA, 92400 Courbevoie (FR)
(72) Inventor: SANDER, Martin, 91120 PALAISEAU (FR)
(74) Representative: Lavoix

(57) **Abstract**

The invention concerns a photovoltaic module, comprising a photovoltaic cell panel (10) and a frame (2) for supporting and holding the panel (10) in position. The frame is in two parts (2a, 2b), of which a first part (2a) comprises clipping means (8) with the second part (2b). Alternatively, the frame comprises clipping means (8) for clipping the panel (10) inside the frame, and such clipping means (8) are configured to be elastically deformed when the panel (10) is laid flat within the frame (2) and to automatically return to a position where they prevent the panel (10) from coming out of the frame (2).

## Description

The invention concerns a photovoltaic module, as well as a process for manufacturing a photovoltaic module.

In a known way, a photovoltaic module, also known as a photovoltaic panel, is a device for converting solar energy into electrical energy. A photovoltaic module comprises a set of photovoltaic cells electrically connected together. Typically, photovoltaic systems consist of several modules positioned, for example, on the roofs of a building. Solar power plants also include a field of solar panels, each mounted on an inclined support placed on the ground. This is called a solar farm.

Photovoltaic cells are relatively flexible, which is why photovoltaic modules include a frame, usually made of Aluminum, to support and hold the photovoltaic cells in position. Typically, this frame takes the form of a rectangular chassis inside which the photovoltaic cells are received. US 2011/0155127 A1 discloses an example of a photovoltaic module frame. In this document, the frame is composed of four extruded segments assembled with each other to form a rigid rectangular chassis around the photovoltaic cells.

Photovoltaic cells are fragile and must therefore be protected from mechanical stresses, particularly bending stresses, because this can cause one or more cells to crack, and therefore malfunctions (overheating, loss of power, etc.).

However, the rigidity conferred by the frame is generally not sufficient when the photovoltaic module is exposed to wind or snowfall, which is why photovoltaic cells are sometimes covered with a plate made of more rigid material, which is usually glass.

In order to further improve the overall rigidity of the photovoltaic panel, and to resist for example localized stresses such as the weight of an operator walking on the panel, it is known, for example EP 2 019 435 A2, to fix, below the photovoltaic cells, one or more stiffeners. These stiffeners serve as a support for the photovoltaic cells and thus limit the deformations of the cells in flexion. Nevertheless, the assembly of the stiffeners is an additional step for the manufacture of the frame, and therefore increases the manufacturing costs of the frame.

To overcome this problem, it is known, for example from US 4 611 090, to manufacture the frame in a single piece resin. Thanks to this process, it is possible to manufacture a frame, comprising a rectangular chassis and central stiffeners, in a single step. However, this requires a change in the way photovoltaic cells are assembled inside the frame. US 4 611 090 teaches to bend the photovoltaic cells and then to flatten it and slide it into two holding flanges arranged opposite to each other. This technique of assembly by deformation (bending) of the photovoltaic cells is likely to degrade the integrity of the cells, and to cause later dysfunctions of the type loss of power or overheating.

It is to these disadvantages that the invention intends more particularly to remedy by proposing a new type of photovoltaic module, in which photovoltaic cells can be assembled to the frame without risk of degradation.

A first embodiment of a photovoltaic module is defined in claim 1. Advantageously, this photovoltaic module can incorporate the features of any one of the claims 2 to 4.

A second embodiment of a photovoltaic module is defined in claim 5.

Thanks to the invention, photovoltaic cells are simply clipped onto the frame or positioned flat between two clipped parts of the frame, so that the risk of cell degradation during assembly is greatly reduced. Also, this clip-on assembly technique allows cells to be covered with a rigid protective plate, such as a glass plate, to be assembled directly. It is also advantageous in the sense that there is no need for a special tool.

Advantageous, but not mandatory, features of both modules are defined in claims 6 to 13.

In addition, two manufacturing processes for a photovoltaic module are defined in Claims 14 and 15 respectively.

The invention and other advantages of this one will appear more clearly in the light of the description which will follow of three embodiments of a photovoltaic module, and of the corresponding manufacturing processes. This description is given only as an example and is made with reference to the attached drawings in which:
- Figure 1 is a perspective view of a photovoltaic module conforming to a first embodiment of the invention, this module comprising a frame and a rigid panel consisting in part of photovoltaic cells;
- Figure 2 is a larger scale view of the circled zone II in Figure 1;
- Figure 3 is a schematic representation of the panel structure including the cells ;
- Figure 4 is a perspective view of a frame belonging to a photovoltaic module conforming to a second embodiment of the invention;
- Figure 5 is a perspective view of a frame belonging to a photovoltaic module conforming to a third embodiment of the invention; and
- Figure 6 is a larger scale view of the circled zone VI in Figure 5.

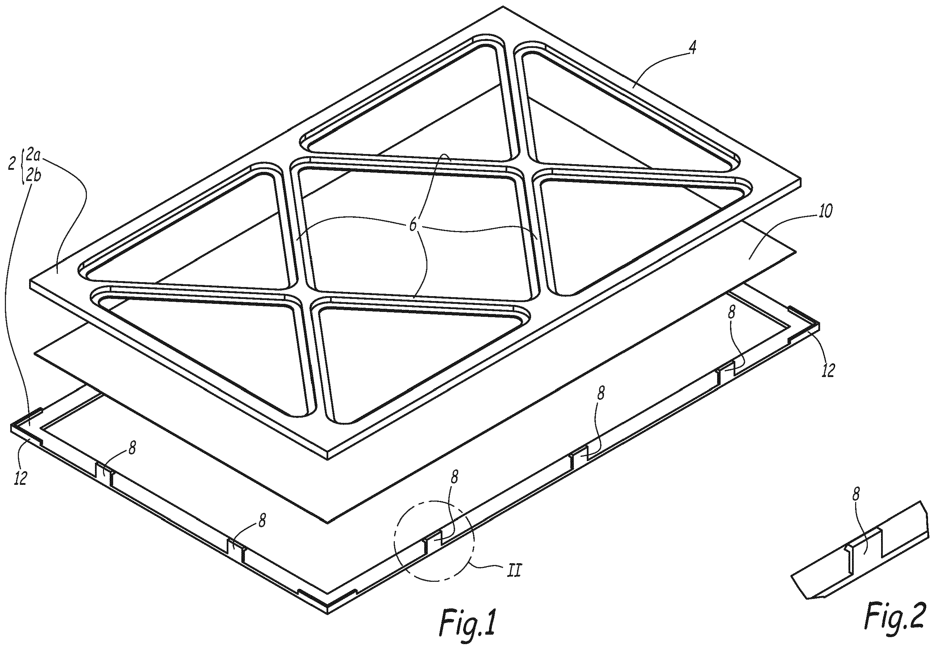

Figures 1 and 2 show a photovoltaic module comprising a photovoltaic cell panel 10 and a frame 2 for supporting and holding the panel 10 in position.

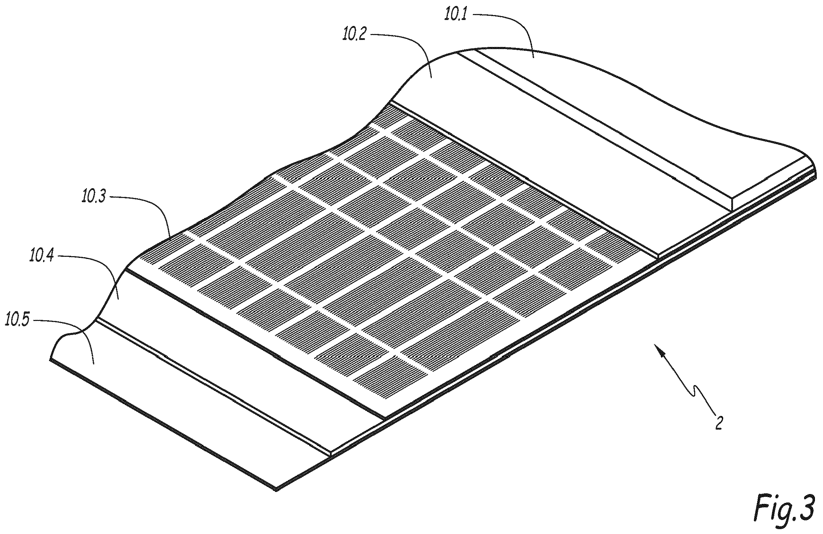

In the example, and as shown on figure 3, the panel 10 is of the laminated type. This means that the panel 10 consists of several superposed layers 10.1 to 10.5 that are numbered from the front layer to the back layer. The "front" and "back" directions shall be interpreted in relation to the direction of the light rays. In other words, a layer placed at the front will be crossed first by the light rays. Typically, the front sheet is designed for being oriented to the top, while the back sheet is designed for being oriented to the bottom, i.e. to the ground.

The layer 10.3 is a layer of photovoltaic cells (or solar cells). The invention applies to any type of solar cells (monocrystalline or polycrystalline silicon, thin-film solar cells, etc.).

The layer 10.1 (also called "frontsheet") is a plate of material more rigid than the layer 10.3. The plate 10.1 protects the photovoltaic cells 10.3 from external mechanical aggressions (snow, hail, wind, etc.).

In the example, the plate 10.1 covering the photovoltaic cells 10.3 is made of rigid transparent material, or at least translucent, typically glass. However, another type of material, such as plastic, could be used. Plate 10.1 is the element that gives the panel 10 its rigidity. It has a bending stiffness in both directions (longitudinal and transversal) greater than 30 GPa (Young's modulus) and a thickness of at least 2 mm.

The layer of photovoltaic cells 10.3 is encapsulated between two protective films 10.2 and 10.4. Advantageously, these two protective films 10.2 and 10.4 are in one piece and are preferably made of polymeric material.

Eventually, the layer 10.5 is a protective sheet (also called "backsheet"). The backsheet 10.5 ensures watertightness and acts as a barrier for environmental influences and as electrical insulation. It is preferably opaque and made of polymeric materials. Alternatively, the backsheet 10.5 could be translucent.

In practice, photovoltaic cells 10.3 are preferably positioned below the rigid plate 10.1 with respect to the direction of the light rays. However, one might consider placing plate 10.1 below, in which case it would not necessarily be transparent or translucent, but could be completely opaque. Alternatively even both outside layers 10.1 and 10.5 could be made of rigid material, for example glass.

The rigid plate 10.1 is optional. Thus, in a variant not shown, panel 10 does not have a rigid plate and is therefore much softer. In practice, the bending properties of such a panel are equivalent to those of the layer of photovoltaic cells 10.3. The characteristics of these so-called "flexible" photovoltaic panels are described for example in the publication WO2018/060611 whose content is incorporated here by reference. In this alternative embodiment, the photovoltaic panel has a bending stiffness in both directions (longitudinal and transversal) lower than 10 GPa (Young's modulus) and a thickness less than 3 mm. In the example, layers 10.1 to 10.5 of panel 10 are glued together.

Thus, the frame 2 is suitable for every type of photovoltaic cell panel, whether flexible or rigid. In other words, the invention is not limited to a photovoltaic module comprising a rigid photovoltaic cell panel, but also applies to flexible photovoltaic cell panels.

Typically, the binder between the layers can be chosen from a set of thermosetting resins. A method for manufacturing such panel 10 is described for example in the publication WO2018/060611. Preferably, frame 2 is made of polymer, especially plastic. Here, frame 2 is rectangular in shape but one could imagine, as an alternative, a frame of any other shape (polygonal, triangular, etc.).

In this embodiment, frame 2 is in two parts, of which a first part 2a includes clipping means 8 with the second part 2b. Such clipping means 8 are configured to be elastically deformed when the second frame part 2b is laid flat on (or within) the first frame part 2a and to automatically return to a position where they prevent the second frame part 2b from detaching from (or coming out of) the first frame part 2a.

Preferably, the two parts 2a and 2b of frame 2 are rectangular in shape. In other words, each part 2a or 2b includes a rectangular chassis.

In the example, the two parts 2a and 2b of the frame 2 can be completely detached from each other.

Advantageously, the clipping means 8 are arranged on each side of the first part 2a of the frame 2. Typically, there are two clipping members on the short sides of part 2a and three clipping members on the long sides of part 2a. However, the number of clipping elements is of course not limited to this particular configuration. Clipping members 8 are in fact tabs configured to allow attachment to part 2b, and therefore include a free end projecting towards the inside of the frame part 2a. In the example, such free end is of triangular cross section.

In the way the figures are made, part 2b of frame 2 comprises a peripheral chassis 4 which is, in the example, a rectangular chassis 4, and at least one, preferably several central stiffeners 6. Each central stiffener 6 is preferably manufactured in one piece with the rectangular chassis 4. In the example, the central stiffeners 6 form at least one, in particular two crosses, which are here saltires (Saint Andrew's crosses). It is obvious that, as an alternative, the stiffeners 6 could also form a Greek cross or be of different geometry (triangulation, ribs, etc.).

The photovoltaic module, as shown in Figure 1, can be manufactured as follows. A first step consists in positioning the panel 10 including the photovoltaic cells 10.3 inside the first part 2a of the chassis 2. In this step, panel 10 is simply placed on frame part 2a. In other words, the panel 10 is laid flat within frame part 2a.

L-shaped flanges 12 are advantageously provided at the four corners of the frame part 2a to prevent the photovoltaic cells from slipping.

A second step consists in clipping the second part 2b of the frame 2 onto the first part 2, so as to maintain the panel 10, including the photovoltaic cells 10.3, between the two parts 2a and 2b of the frame. In practice, frame part 2b is placed horizontally on frame part 2a, which has the effect of elastically deforming the tabs 8 towards the outside of frame part 2a. When the frame part 2b has passed the projecting part of the tabs 8, these automatically return to their initial shape by elastic return of the material, and come to hang on the frame part 2b. In this position, the tabs 8 prevent the two parts 2a, 2b of the frame 2 from separating apart.

The two parts 2a and 2b of frame 2 are then attached to each other and panel 10, including photovoltaic cells 10.3, is slightly pinched between the two parts 2a and 2b of frame 2.

The photovoltaic module therefore comprises two frame parts 2a and 2b superimposed on each other, with a photovoltaic cell panel 10 in between.

Advantageously, both frame parts are manufactured by 3D printing or injection moulding.

If necessary, a bead of adhesive material can be applied to glue the panel 10, and thus the photovoltaic cells 10.3, to the frame 2. This bead of adhesive material can be applied either before or after the panel 10 is installed, and also on frame part 2a and/or frame part 2b.

Another aspect of the invention is that the panel 10 can easily be detached from the frame 2. Indeed, it is sufficient to simply unclip the two parts 2a and 2b of the frame and to remove the photovoltaic cell panel 10 interposed between the two parts 2a and 2b of the frame. In particular, the clipping means 8 are forced towards the outside of the frame 2 in order to be able to detach frame part 2b from frame part 2a. After part 2b is undipped, it is possible to withdraw the photovoltaic cell panel and eventually replace it by a new panel.

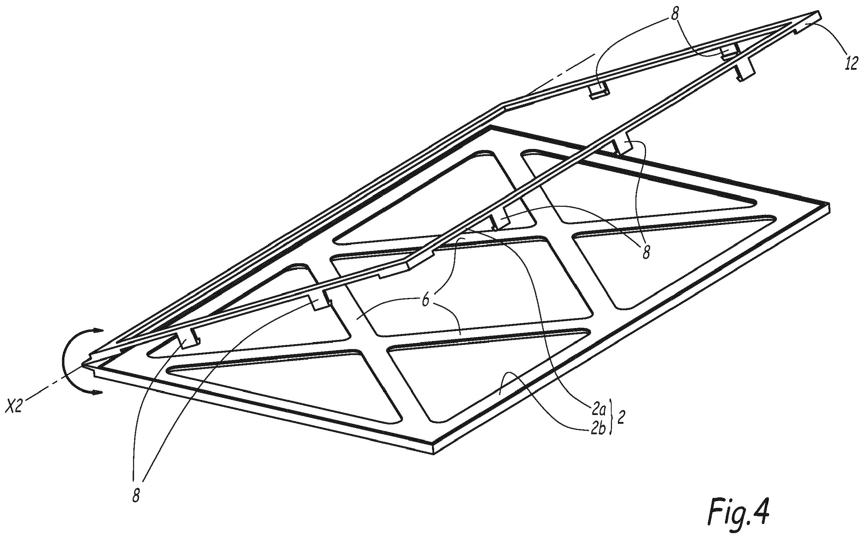

Figure 4 shows a frame 2 of another embodiment of a photovoltaic module. In what follows, only the differences compared to the first embodiment are mentioned for the sake of brevity. In addition, the same numerical references are used to avoid any confusion.

In this embodiment, the frame 2 is foldable, meaning that the two parts 2a and 2b of the frame 2 are articulated with each other. Accordingly, the two frame parts 2a and 2b cannot be completely detached from each other.

More precisely, frame 2 is a single part with a flexible joint on one side that allows rotation of the two frame parts 2a and 2b around an axis of articulation X2.

Typically, in the example, the joint is on a long side of the frame parts 2a and 2b. Obviously, in an alternative embodiment, the joint could be on a short side of the frame parts.

In this embodiment, the clipping means 8 are configured to be elastically deformed when the second frame part 2b is assembled with, i.e. pivoted towards the first frame part 2a and to automatically return to a position where they prevent the second frame part 2b from disassembling from the first frame part 2a, in particular to a position where they prevent the frame 2 from unfolding (or opening).

The photovoltaic cell panel is manufactured as follows. As in the first embodiment, a first step consists in positioning a photovoltaic cell panel 10 inside the first part 2a of the frame 2 and a second step consists in clipping the second part 2b onto the first part. During the second step, the clipping means 8 are elastically deformed when the second frame part 2b is pivoted towards the first frame part 2a and to automatically return to a position where they prevent the second frame part 2b from rotating relative to the first frame part 2a.

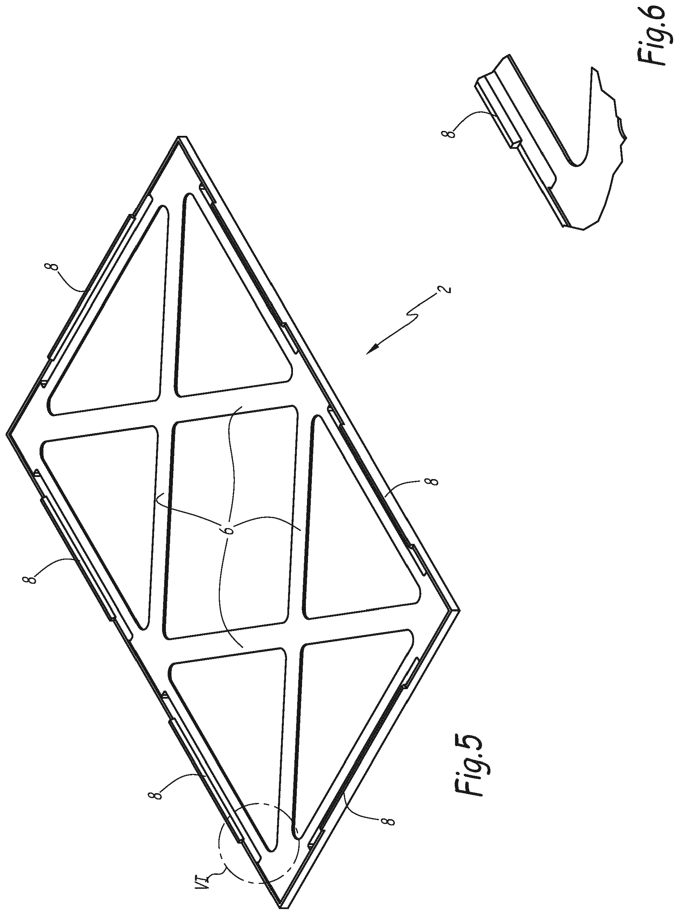

Figures 5 and 6 show a frame 2 of another embodiment of a photovoltaic module. In what follows, only the differences compared to the first two embodiments are mentioned for the sake of brevity. In addition, the same numerical references are used to avoid any confusion.

In this construction mode, the frame 2 is in one piece. In the example, it includes a peripheral chassis, typically a rectangular chassis 4 and central stiffeners 6.

Frame 2 includes clipping means 8 for clipping a photovoltaic cell panel 10 inside frame 2. Such clipping means 8 are configured to be elastically deformed when the panel 10 is laid flat within the frame 2 and to automatically return to a position where they prevent the panel 10 from coming out of the frame 2.

Advantageously, stiffeners 6 are used to limit cell deformation when high bending stresses are applied to panel 10, such as when an object falls or when someone is walking on the panel. The advantage of having a frame with a peripheral frame and central stiffeners is that the frame can give a certain rigidity to a flexible photovoltaic panel, i.e. without a rigid plate, such as 10.1. We then speak of a rigidifying frame.

The clipping means 8 of the second embodiment are obviously less high than those of the first embodiment, as they are only adapted to the thickness of panel 10. Clipping members 8 are in fact tabs configured to allow attachment to panel 10, and therefore include a free end projecting towards the inside of the frame.

In this embodiment, the module manufacturing process consists of a single step consisting in clipping the photovoltaic cells 10 panel 10 inside the frame 2. During this step, clipping means 8 of the frame 2 are elastically deformed when the panel 10 is laid flat within the frame and automatically return to a position where they prevent the panel 10 from coming out of the frame 2.

In practice, the panel 10 is placed horizontally on the frame 2, which has the effect of elastically deforming the tabs 8 towards the outside of the frame 2. When the panel 10 has passed the projecting part of the tabs 8, these automatically return to their initial shape by elastic return of the material, and come to hang on the panel 10. In this position, the tabs 8 prevent the panel 10 from coming out of the frame 2.

The photovoltaic module therefore comprises the frame 2 and the photovoltaic panel 10 superimposed on each other.

We may also apply a bead of adhesive material to bond the photovoltaic cell panel 10 to the frame 2.

As in the first embodiment, the panel 10 can easily be detached from the frame 2. Indeed, it is enough simply to unclip the panel 10 from the frame. In particular, the clipping means 8 are forced towards the outside of the frame 2 in order to be able to detach the photovoltaic cell panel 10. It is then possible to replace the photovoltaic cell panel 10 by a new panel.

The features of the depicted embodiments and alternatives not shown can be combined to generate new embodiments of the invention.

## Claims

1. Photovoltaic module, comprising a photovoltaic cell panel (10) and a frame (2) for supporting and holding the panel (10) in position, **characterized in that** the frame includes two parts (2a, 2b), of which a first part (2a) comprises clipping means (8) with the second part (2b) and **in that** such clipping means (8) are configured to be elastically deformed when the second frame part (2b) is assembled with the first frame part (2a) and to automatically return to a position where they prevent the second frame part (2b) from disassembling from the first frame part (2a).

2. Photovoltaic module according to claim 1, **characterized in that** both parts (2a, 2b) of the frame (2) are rectangular in shape.

3. Photovoltaic module according to claim 1 or 2, **characterized in that** the two parts (2a, 2b) of the frame (2) are articulated with each other.

4. Photovoltaic module according to claim 1 or 2, **characterized in that** the two parts (2a, 2b) of the frame (2) can be completely detached from each other.

5. Photovoltaic module, comprising a photovoltaic cell panel (10) and a frame (2) for supporting and holding the panel (10) in position, **characterized in that** the frame comprises clipping means (8) for clipping the panel (10) inside the frame, and **in that** such clipping means (8) are configured to be elastically deformed when the panel (10) is laid flat within the frame (2) and to automatically return to a position where they prevent the panel (10) from coming out of the frame (2).

6. Module according to one of the above claims, **characterized in that** the photovoltaic cell panel (10) consists of several superposed layers, comprising a layer (10.3) of photovoltaic cells and a plate (10.1) of a more rigid material.

7. Module according to claim 6, **characterized in that** the plate (10.1) is made of a transparent or translucent material, for example glass or plastic.

8. Module according to one of the claims 1 to 5, **characterized in that** the photovoltaic cell panel (10) consists of several superposed layers, comprising a layer (10.3) of photovoltaic cells and no layer of a more rigid material.

9. Module according to one of the above claims, **characterized in that** the clipping means (8) are arranged on each side of the frame (2) or on each side of one part (2a) of the frame.

10. Module according to one of the above claims, **characterized in that** the frame (2) is made of polymer, in particular plastic.

11. Module according to one of the above claims, **characterized in that** the frame (2) comprises a peripheral chassis (4), preferably a rectangular chassis, and at least one central stiffener (6) and **in that** each central stiffener (6) is preferably produced in one piece with the peripheral chassis (4).

12. Module according to one of the preceding claims, **characterized in that** the frame (2) comprises several central stiffeners (6) forming at least one cross, in particular a saltire.

13. Module according to one of the preceding claims, **characterized in that** the photovoltaic cell panel (10) consists of several superposed layers, comprising, in order:
- a protective sheet (10.5),
- a layer (10.3) of photovoltaic cells encapsulated between two protective films (10.2, 10.4), and
- a plate (10.1) of material more rigid than the cells, for example a glass plate.

14. Process for manufacturing a photovoltaic module, such as the one of claim 1, **characterized in that** it comprises a first step consisting in positioning a photovoltaic cell panel (10) inside a first part (2a) of a frame (2) and a second step consisting in clipping a second part (2b) of the frame onto the first part, and **in that**, during the second step, clipping means (8) are elastically deformed when the second frame part (2b) is assembled with the first frame part (2a) and to automatically return to a position where they prevent the second frame part (2b) from disassembling from the first frame part (2a).

15. Process for manufacturing a photovoltaic module, such as the one of claim 5, **characterized in that** it comprises a step consisting in clipping a photovoltaic cell panel (10) inside a frame (2) and **in that**, during this step, clipping means (8) of the frame (2) are elastically deformed when the panel (10) is laid flat within the frame and automatically return to a position where they prevent the panel (10) from coming out of the frame (2).
